# EUROPÄISCHE PATENTSCHRIFT

(11) **EP 0 492 219 B1**
(45) Veröffentlichungstag und Bekanntmachung des Hinweises auf die Patenterteilung: **19.07.1995**
(21) Anmeldenummer: 91120979.9
(22) Anmeldetag: 06.12.1991
(51) Int. Cl.: B01D 17/022

(54) **Vorrichtung zum Trennen von Öl-Wasser-Gemischen**
Device for the separation of oil-water-mixtures
Dispositif de séparation de mélanges d'huile et d'eau

(30) Priorität: 27.12.1990 DE 4041903
(43) Veröffentlichungstag der Anmeldung: 01.07.1992
(73) Patentinhaber: CFM GmbH chemo-technische produkte, 84453 Mühldorf (DE)
(72) Erfinder: Sachse, Helmut, W-8050 Freising (DE); Schembra, Konrad, W-8070 Ingolstadt (DE); Fleischmann, Horst, W-8263 Burghausen (DE); Griesshammer, Rudolf, Dr., W-8262 Altötting (DE)
(74) Vertreter: DIEHL GLAESER HILTL & PARTNER

(56) Entgegenhaltungen:
- DE-A- 2 249 499
- DE-A- 2 335 689
- DE-A- 3 440 506
- US-A- 1 927 875
- US-A- 2 588 794
- US-A- 3 528 547

## Beschreibung

Die Erfindung betrifft eine Vorrichtung zum Trennen von Öl-Wasser-Gemischen, mit einem Filtermedium aus einer für Öl und Wasser aufnahmefähigen Viskoseschwammschicht.

Die Entsorgung von Gemischen aus Öl und Wasser bereitet große Probleme. Dies gilt beispielsweise für Öl-Wasser-Gemische, die im Zusammenhang mit der Wartung von Kraftfahrzeugen in Werkstätten und Tankstellen anfallen. Diese Gemische dürfen einerseits nicht in die öffentlichen Abwassersysteme eingeleitet werden, können andererseits aber auch nicht durch Verbrennung entsorgt werden, weil sie sehr schwer brennbar sind. Auch treten solche Flüssigkeitsgemische dann auf, wenn durch Undichtigkeiten von Lagertanks oder bei Unfällen freigewordenes Öl in natürliche Gewässer oder in das Grundwasser gelangen.

Es ist bereits versucht worden, aus den genannten Gemischen das Öl abzutrennen, um es dann auf üblichem Wege verbrennen zu können. Ein Mittel zur Durchführung eines solchen Verfahrens ist ein an sich bekannter Viskoseschwamm, durch den das Öl-Wasser-Gemisch hindurchgeführt wird. Bei diesem Schwamm handelt es sich um ein Material aus regenerierter Cellulose, das von offenen Poren durchsetzt und mit Fasern verstärkt ist. Zur Herstellung des Schwamms wird beispielsweise aus Holz oder Baumwolle zunächst Cellulose gewonnen. Diese wird der Reihe nach mit Natriumcarbonat, Schwefelkohlenstoff und Natriumhydroxid behandelt und dann mit den verstärkenden Fasern, wie Baumwoll-, Ramie-, Flachs-, Sisal- oder Hanffasern in einer Länge von etwa 1 bis 10 mm oder mehr, versetzt. Nach der Zugabe von Natriumsulfatkristallen wird das Gemisch koaguliert, und diese Kristalle werden dann herausgelöst, wobei die gewünschten Poren des Viskoseschwamms gebildet werden.

Ein solcher Viskoseschwamm hat als Filtermedium für Öl-Wasser-Gemische den Nachteil, daß er das Öl nur unzureichend zurückhält. Dies führt dazu, daß nach einer gewissen Anfangsphase der guten Trennung von Öl und Wasser das Öl durch die Viskoseschwammschicht "durchbricht" und somit keine Trennung vom Wasser mehr erfolgt. Um dies zu verhindern, muß die Viskoseschwammschicht rechtzeitig erneuert werden. Es ist aber sehr schwierig, bei unterschiedlichen Ölanteilen in den Öl-Wasser-Gemischen jeweils vorherzusehen, wann ein solcher Öldurchbruch zu erwarten ist. In jedem Fall kann deshalb aus Sicherheitsgründen das Ölaufnahmevermögen der Viskoseschwammschicht zu einem erheblichen Anteil nicht ausgenutzt werden.

Daneben sind auch Viskosetücher bekannt, die gleichfalls ein aus Cellulose gewonnenes Material darstellen. Es besteht beispielsweise im wesentlichen aus einem gepreßten Gemisch aus Rohbaumwollfäden und regenerierter Cellulose. Letztere liegt zum Beispiel in einer Menge von 70 % vor. Auch solche Viskosetücher sind handelsüblich.

Der Erfindung liegt die Aufgabe zugrunde, eine Vorrichtung anzugeben, mit deren Hilfe Gemische aus miteinander nicht mischbaren Flüssigkeiten, insbesondere Öl-Wasser-Gemische, auf einfache und sichere Weise getrennt werden können. Im Falle von Öl-Wasser-Gemischen soll die Vorrichtung dazu beitragen, das Öl möglichst vollständig und umweltfreundlich entsorgen zu können.

Diese Aufgabe löst die Erfindung durch eine Vorrichtung der eingangs genannten Art, die dadurch gekennzeichnet ist, daß in Strömungsrichtung des zu trennenden Flüssigkeitsgemisches nach mindestens einer Viskoseschwammschicht mindestens ein ölabweisendes Viskosetuch angeordnet ist.

Die erfindungsgemäße Vorrichtung hat den Vorteil, daß durch einen einfachen Filtervorgang ein Öl-Wasser-Gemisch in seine beiden Komponenten aufgetrennt werden kann. Dazu läßt man das zu behandelnde Flüssigkeitsgemisch durch eine Anordnung aus dem Viskoseschwamm und dem nachgeschalteten Viskosetuch hindurchtreten. Dies geschieht vorzugsweise ohne besonderen Energieaufwand mit Hilfe der Schwerkraft, also in einer Strömungsrichtung von oben nach unten. Jedoch kann bei Bedarf der Trennvorgang auch durch Anwendung eines Überdrucks auf der Seite der Zufuhr des Flüssigkeitsgemisches zu dem Viskoseschwamm oder durch entsprechende Ausbildung eines Unterdrucks auf der Seite des Viskosetuchs der Trennvorgang beschleunigt werden, wobei dann die Strömungsrichtung von der Schwerkraftrichtung auch abweichen kann. Beim Strömen des Flüssigkeitsgemisches durch die Vorrichtung wird das Öl von der Viskoseschwammschicht und dem Viskosetuch zurückgehalten, während das Wasser durch beide hindurchtritt.

Anschließend kann das Öl zusammen mit der Viskoseschwammschicht und dem Viskosetuch durch eine saubere Verbrennung entsorgt und das Wasser ohne Umweltgefährdung dem öffentlichen Abwassersystem zugeführt werden. Eine Belastung der Umwelt durch Öl aus Öl-Wasser-Gemischen kann so vermieden werden.

Ein besonderer Vorteil der erfindungsgemäßen Vorrichtung liegt in der Sicherheit, daß das Aufnahmevermögen des Viskoseschwamms maximal ausgenutzt werden kann, ohne das Risiko einzugehen, daß das in der Viskoseschwammschicht sich ansammelnde Öl durch die Viskoseschwammschicht durchbricht und das als Filtrat erhaltene ölfreie Wasser wieder verunreinigt. Da das Viskosetuch ölabweisend ist, verhindert es nicht nur einen unerwünschten Durchtritt des Öls, sondern wird durch dessen Ansammlung an der dem Viskoseschwamm zugewandten Seite des Viskosetuchs in steigendem Maße für das Wasser undurchlässig. Die Folge ist eine verminderte Durchtrittsmenge des Wassers durch das Viskosetuch, wodurch dann leicht erkannt wird, daß das Ölaufnahmevermögen der erfindungsgemäßen Vorrichtung erschöpft ist und die Kombination aus der Viskoseschwammschicht und dem Viskosetuch durch eine frische Kombination ersetzt werden muß. Die Verminderung der durch das Viskosetuch hindurchtretenden Wassermenge kann dabei in üblicher Weise meßtechnisch erfaßt werden und ein Signal auslösen. Umgekehrt kann die Erschöpfung der Viskoseschwammschicht auch über die sich verlangsamende oder nicht mehr gegebene Absenkung des Flüssigkeitsniveaus auf der Eingangsseite der Vorrichtung erkannt werden.

Gemäß einer bevorzugten Ausführungsform der erfindungsgemäßen Vorrichtung beträgt in Strömungsrichtung des zu trennenden Flüssigkeitsgemisches die Dicke der Viskoseschwammschicht mindestens das 25fache, vorzugsweise das 40- bis 50fache, der Dicke des Viskosetuchs. Die Einhaltung dieser Bedingung stellt sicher, daß während des Trennvorgangs das Öl-Wasser-Gemisch innerhalb der Viskoseschwammschicht in ausreichendem Maße vorgetrennt wird. Dies bewirkt, daß das Wasser in der Viskoseschwammschicht dem langsamer fließenden Öl vorausströmt und durch das Viskosetuch hindurchtritt, bevor das Öl dorthin gelangt.

Ein Weglassen des Viskosetuchs würde nicht nur dazu führen, daß im Laufe des Trennvorgangs das Öl durch die Viskoseschwammschicht durchbricht und das vorher abgetrennte Wasser wieder verunreinigt, sondern würde auch ein rechtzeitiges Erkennen der Erschöpfung der Viskoseschwammschicht verhindern.

Es ist auch besonders zweckmäßig, die erfindungsgemäße Vorrichtung so auszubilden, daß in Strömungsrichtung des zu trennenden Flüssigkeitsgemisches nach dem Viskosetuch mindestens eine weitere Viskoseschwammschicht und mindestens ein weiteres Viskosetuch angeordnet sind. Dadurch kann die Sicherheit des Trennens der verschiedenen Flüssigkeitskomponenten und die Sicherheit gegen ein Durchbrechen der zunächst zurückgehaltenen Flüssigkeitskomponente bei zu langer Benutzung der Vorrichtung erhöht werden. Die verschiedenen Viskoseschwammschichten und Viskosetücher können sich beispielsweise durch unterschiedliche Schichtdicken, Porositäten und/oder Farben voneinander unterscheiden.

Insbesondere hat es, sich auch als günstig erwiesen, wenn mindestens eine Viskoseschwammschicht als Indikatorschicht ausgebildet ist, die das Eintreten einer der abzutrennenden Flüssigkeiten in diese Schicht anzeigt. Dies hat den Vorteil, daß es sofort erkannt werden kann, wenn die Front der abzutrennenden Flüssigkeitskomponente in ihrer Strömungsrichtung einen bestimmten Punkt der Vorrichtung erreicht hat und gegebenenfalls die Anordnung aus Viskoseschwammschicht(en) und Viskosetuch(-tücher) wegen Erschöpfung erneuert werden muß. Die Indikatorschicht kann beispielsweise durch Änderung ihrer Farbe oder in anderer Weise die Ankunft der gewünschten Flüssigkeitskomponente anzeigen.

Die Erfindung wird durch die in der Zeichnung schematisch dargestellten Ausführungsbeispiele erläutert.

Es zeigen
- Fig.1: eine erste Ausführungsform der Vorrichtung mit einer Viskoseschwammschicht und einem Viskosetuch; und
- Fig. 2: eine zweite Ausführungsform der Vorrichtung mit fünf Viskoseschwammschichten und zwei Viskosetüchern.

Die Benutzung der Erfindung in der Praxis wird durch die nachfolgenden Beispiele 1 und 2 erläutert.

### Beispiel 1

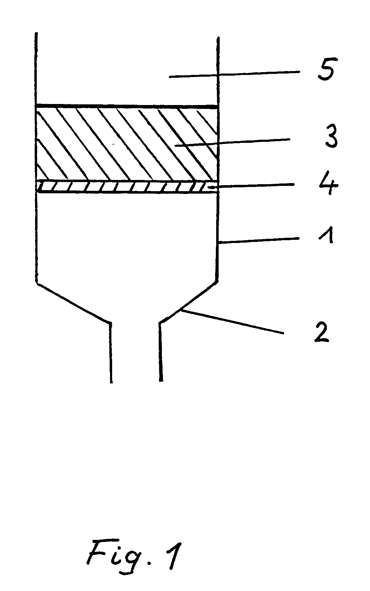

In Fig. 1 ist schematisch eine Vorrichtung zum Trennen eines Öl-Wasser-Gemisches dargestellt. Die Vorrichtung besteht im wesentlichen aus einem senkrecht angeordneten zylindrischen Gehäuseabschnitt 1 und einem darunter sich anschließenden, sich nach unten verjüngenden, trichterförmigen Gehäuseabschnitt 2. In dem zylindrischen Gehäuseabschnitt 1 erstreckt sich über den gesamten Innenquerschnitt eine Viskoseschwammschicht 3, die an ihrer Unterseite über ihre gesamte Fläche von einem Viskosetuch 4 abgedeckt ist.

Die Viskoseschwammschicht 3 besteht im wesentlichen aus regenerierter Cellulose, die mit Baumwoll- und Hanffasern verstärkt ist. Das Viskosetuch 4 ist ein gepreßtes Material aus im wesentlichen regenerierter Cellulose und Rohbaumwollfäden, wobei der Anteil an regenerierter Cellulose etwa 70 Gew.-% beträgt. Sowohl der Viskoseschwamm als auch das Viskosetuch sind mit unterschiedlichen Porositäten im Handel erhältlich, beispielsweise von den Firmen Spontex, 3M Company, Hoechst AG und Enka AG. Entsprechende Produktbezeichnungen lauten z.B. "Spontex Typ 2246" und "Geaquello R 212".

Der mit dem Innendurchmesser des zylindrischen Gehäuseabschnitts 1 übereinstimmende Durchmesser der Viskoseschwammschicht 3 beträgt 200 mm und die Dicke dieser Schicht 3 liegt bei 100 mm. Der Durchmesser des Viskosetuchs 4 beträgt gleichfalls 200 mm und dessen Dicke 2 mm. Das Gewicht der Viskoseschwammschicht 3 beträgt 40 g.

Vor dem Beschicken der Vorrichtung mit einem Öl-Wasser-Gemisch wird über ihre Einfüllöffnung 5 soviel Wasser zugegeben, daß die Viskoseschwammschicht 3 und das Viskosetuch 4 davon ganz durchtränkt werden. Dann wird die Vorrichtung mit 200 g eines Gemisches aus 100 g Kraftfahrzeugaltöl und 100 g Wasser beschickt. Das Gewicht des Öls in dem Gemisch beträgt das 2,5fache des Gewichts der Viskoseschwammschicht 3.

Nach einer Durchlaufzeit von ca. 80 min ist das Öl-Wasser-Gemisch getrennt. Das Öl wird in der Viskoseschwammschicht 3 zurückgehalten, während das Wasser diese Schicht 3 und das Viskosetuch 4 durchläuft. Das Wasser ist praktisch ölfrei und kann dem öffentlichen Abwassersystem zugeführt werden. Es sind lediglich noch einige schwache Fettaugen an der Wasseroberfläche erkennbar.

Gegen Ende des Trennvorgangs wird eine Verlangsamung des aus dem Viskosetuch 4 austretenden Wasserstroms beobachtet. Jedoch bricht kein Öl durch das Viskosetuch hindurch.

Nach Beendigung des Trennvorgangs wird das Altöl dadurch entsorgt, daß es zusammen mit der Kombination aus der Viskoseschwammschicht 3 und dem Viskosetuch 4 verbrannt wird.

### Beispiel 2

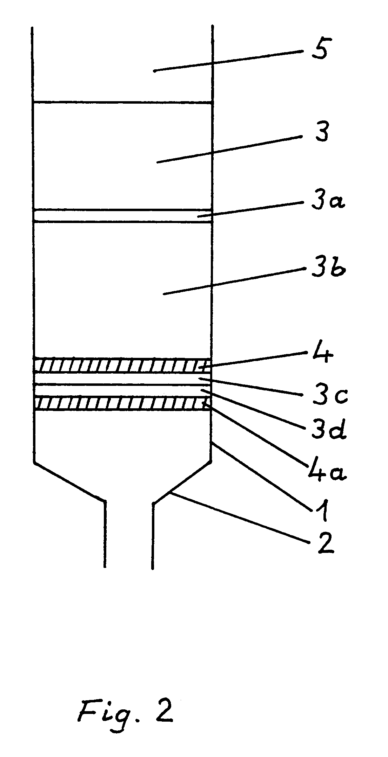

Der Versuch gemäß Beispiel 1 wird mit einer Vorrichtung gemäß Fig. 2 wiederholt. Die in Fig. 2 angegebenen Bezugszeichen haben die gleiche Bedeutung wie die identischen Bezugszeichen in Fig. 1.

Jedoch ist die Vorrichtung gemäß Fig. 2 in Strömungsrichtung des zu trennenden Flüssigkeitsgemisches nach der ersten Viskoseschwammschicht 3 der Reihe nach mit einer relativ dünnen zweiten Viskoseschwammschicht 3a (erste Indikatorschicht), einer relativ dicken dritten Viskoseschwammschicht 3b, einem ersten Viskosetuch 4, einer relativ dünnen vierten Viskoseschwammschicht 3c (Sicherheitszone), einer relativ dünnen fünften Viskoseschwammschicht 3d (zweite Indikatorschicht) und mit einem zweiten Viskosetuch 4a ausgerüstet. Die als erste und zweite Indikatorschichten dienenden Viskoseschwammschichten 3a, 3d ändern deutlich ihre Farbe, wenn sie von Kraftfahrzeugaltöl durchtränkt werden.

Es wird in der Vorrichtung gemäß Fig. 2 ebenfalls eine gute Trennwirkung bei dem genannten Flüssigkeitsgemisch erzielt.

## Patentansprüche

1. Vorrichtung zum Trennen von Öl-Wasser-Gemischen, mit einem Filtermedium aus einer für Öl und Wasser aufnahmefähigen Viskoseschwammschicht (3, 3a, 3b, 3c, 3d), in der das Wasser dem Langsamer fließenden Öl vorausströmt, dadurch gekennzeichnet, daß in Strömungsrichtung des zu trennenden Flüssigkeitsgemisches nach mindestens einer Viskoseschwammschicht (3, 3a, 3b, 3c, 3d) mindestens ein ölabweisendes Viskosetuch (4, 4a) angeordnet ist.

2. Vorrichtung nach Anspruch 1, dadurch gekennzeichnet, daß in Strömungsrichtung des zu trennenden Flüssigkeitsgemisches die Dicke der Viskoseschwammschicht (3, 3b) mindestens das 25fache der Dicke des Viskosetuchs (4, 4a) beträgt.

3. Vorrichtung nach Anspruch 1 oder 2, dadurch gekennzeichnet, daß in Strömungsrichtung des zu trennenden Flüssigkeitsgemisches nach dem Viskosetuch (4) mindestens eine weitere Viskoseschwammschicht (3c, 3d) und mindestens ein weiteres Viskosetuch (4a) angeordnet sind.

4. Vorrichtung nach einem der Ansprüche 1 bis 3, dadurch gekennzeichnet, daß mindestens eine Viskoseschwammschicht als Indikatorschicht (3a, 3d) ausgebildet ist, die das Eintreten einer der abzutrennenden Flüssigkeiten in diese Schicht (3a, 3b) anzeigt.

## Claims

1. Device for the separation of oil-water-mixtures, with a filter medium consisting of a viscose sponge layer (3, 3a, 3b, 3c, 3d) which has the ability to take up oil and water and wherein the water flows in front of the slower flowing oil, characterized in that in the flow direction of the liquid mixture to be separated there is arranged at least one oil-repellent viscose fabric (4, 4a) after at least one viscose sponge layer (3, 3a, 3b, 3c, 3d).

2. Device according to claim 1, characterized in that in the flow direction of the liquid mixture to be separated the thickness of said viscose sponge layer (3, 3b) is at least 25 times as thick as said viscose fabric (4, 4a).

3. Device according to claim 1 or 2, characterized in that in the flow direction of the liquid mixture to be separated at least one further viscose sponge layer (3c, 3d) and at least one further viscose fabric (4a) is arranged after said viscose fabric (4).

4. Device according to any one of claims 1 to 3, characterized in that at least one viscose sponge layer is formed as an indicator layer (3a, 3d) which indicates the entering of one of the liquids to be separated into said layer (3a, 3b).

## Revendications

1. Dispositif de séparation de mélanges huile-eau, comportant une matière filtrante obtenue à partir d'une couche d'éponge viscose (3, 3a, 3b, 3c, 3d) absorbante pour l'huile et l'eau, dans laquelle l'eau s'échappe de l'huile qui s'écoule lentement, caractérisé en ce que, dans la direction d'écoulement du mélange liquide à séparer, après au moins une couche d'éponge viscose (3, 3a, 3b, 3c, 3d), est disposée au moins un tissu de viscose (4, 4a) imperméable à l'huile.

2. Dispositif selon la revendication 1, caractérisé en ce que, dans la direction d'écoulement du mélange liquide à séparer, l'épaisseur de la couche d'éponge viscose (3, 3b) est égale à au moins 25 fois l'épaisseur du tissu de viscose (4,4a).

3. Dispositif selon la revendication 1 ou 2, caractérisé en ce que, dans la direction d'écoulement du mélange liquide à séparer, après le tissu de viscose (4), sont disposées au moins une couche d'éponge viscose supplémentaire (3c, 3d) et au moins un tissu de viscose supplémentaire (4a).

4. Dispositif selon l'une des revendications 1 à 3, caractérisé en ce qu'au moins une couche d'éponge viscose est réalisée comme une couche indicatrice (3a, 3d), qui indique l'arrivée dans cette couche (3a, 3d), d'un des liquides à séparer.
